Europäisches Patentamt

European Patent Office

Office européen des brevets

(11) Publication number: **0 481 471 B1**

## EUROPEAN PATENT SPECIFICATION

(45) Date of publication of patent specification: **07.06.95**

(51) Int. Cl.[6]: **C08L 67/02**, //(C08L67/02, 23:08,33:14)

(21) Application number: **91117689.9**

(22) Date of filing: **16.10.91**

(54) **Polymeric blends based on polyethylene terephthalate and high density polyethylene.**

(30) Priority: **16.10.90 IT 2174890**

(43) Date of publication of application:
**22.04.92 Bulletin 92/17**

(45) Publication of the grant of the patent:
**07.06.95 Bulletin 95/23**

(84) Designated Contracting States:
**AT BE CH DE DK ES FR GB GR IT LI LU NL SE**

(56) References cited:
**EP-A- 0 072 455**
**EP-A- 0 342 067**
**EP-A- 0 433 976**

(73) Proprietor: **ENICHEM S.p.A.**
**Piazza Repubblica, 16**
**I-20124 Milano (IT)**

(72) Inventor: **Penco, Maurizio**
**5, Via Leopardi**
**I-20073 Codogno,**
**Milan (IT)**
Inventor: **Pastorino, Antonella**
**3012, Via Casaregis**
**I-16129 Genova (IT)**

(74) Representative: **Weinhold, Peter, Dr. et al**
**Patentanwälte**
**Dr. Weinhold, Dannenberg,**
**Dr. Gudel, Schubert**
**Siegfriedstrasse 8**
**D-80803 München (DE)**

Rank Xerox (UK) Business Services
(3. 10/3.0 9/3.3.3)

**Description**

The present invention relates to polymeric blends (compositions) having high shock resistance and impact strength, essentially comprising an aromatic polyester, an elastomer and from 5 to 12% by weight of high density polyethylene (HDPE).

The development of high impact strength blends based on polyethylene terephthalate (PET) and HDPE is extremely interesting in that it provides the possibility of using recycled materials of the industrial (scraps) and urban (packaging) kind in the production of materials suitable for semistructural-type applications (for example in the field of transportation etc.).

It is known that polyesters alone, particularly PET and polybutylene terephthalate (PBT), are fragile polymers of low impact strength.

It is also known that materials based on polyesters can be toughened by the addition of a wide range of elastomers. For example, toughening elastomeric systems are known, which are based on copolymers of ethylene and acrylic monomers, having an anhydride (JP-A-62-167351) or epoxide (EP-A-341731, WO-A-85/03718) function.

Toughened systems containing partially crosslinked elastomers have been obtained by the reaction, in the molten state, of two elastomeric systems of the type ethylene/acrylic esters containing epoxide and anhydride functions, respectively, (M.Hert, J.C.Jannel and P.Robert, The Sixth Annual Meeting, PPS, April 17-20, 1990 Nice, France; WO 89/05838; EP-A-342067).

With respect to mixtures of aromatic polyesters with polyethylene, the simple mixing thereof withouth the use of compatibilizing agents affords poorly mixed materials because of the high incompatibility of the two components.

These materials also have poor physico-mechanical characteristics. Mixtures containing low concentrations of linear low density polyethylene (LLDPE) are, however, used to facilitate the crystallization of PET (J.L.Throne, Advances in Polymer Technology, Vol.8, No.2, 131-146 (1988)).

Blends based on PET and HDPE produced so far generally show rather low impact strength values even when elastomeric systems such as styrene-ethylene-butene-styrene rubbers (SEBS), ethylene-propylene-diene rubbers (EPDM), ethylene-vinyl acetate rubbers are used as compatibilizing agents (In-Mau Chen and Chii-Ming Shiah, Plastics Engineering, October 1989, 33-35; GB-A-2122627).

The present invention provides polymeric blends based on aromatic polyesters and high density polyethylene (HDPE) which overcome the above-mentioned disadvantages of the known blends.

Particularly, the present invention concerns extremely tough polymeric blends with high impact strength, containing an aromatic polyester, preferably PET, in quantities of from 65 to 73% by weight, the remaining polymeric material comprising high density polyethylene and elastomer(s).

One aspect of the present invention, therefore, concerns polymeric blends basically composed of three polymeric components as well as other components listed below, namely:

(a) at elast one aromatic polyester in quantities of from 65 to 73% by weight with respect to the total quantity of the (usually three) polymeric components;

(b) at least one high density polyethylene in quantities of from 5 to 12% by weight with respect to the total quantity of the polymeric components;

(c) at least one copolymer of ethylene and (meth)acrylic ester(s) with elastomeric characteristics in quantities of from 15 to 25% by weight with respect to the total quantity of the polymeric components; (preferably, at least one of said (meth)acrylic esters contains an epoxide ring);

(d) a typical catalyst for the opening of an epoxide ring, particularly tertiary amines with 15 to 50 carbon atoms, in quantities of from 0.05 to 1% by weight of the total weight of the polymeric components;

(e) optionally, additives selected from minerals, fibrous reinforcing materials, nucleants normally used for polyesters (particularly PET), stabilizing and flame-retarding agents, etc.

Polyesters which are most suitable for the preparation of polymeric compositions according to the present invention are PET, PBT and mixtures thereof as well as the product of the polycondensation of terephthalic acid and a mixture of ethylene and butylene glycols (PET-PBT). PET is particularly preferred because of the physical and mechanical characteristics it imparts to the blends.

For the purpose of the present invention, it is also preferred to use a polyester, particularly a PET, having an intrinsic viscosity of from 0.6 to 0.8 dl/g (measured in chlorophenol at 25°C).

The high density polyethylenes particularly suitable for the purposes of the present invention are those having a Melt Flow Index (MFI) of from 10 to 30 g/10', measured at 190°C with a load of 2.16 kg/cm$^2$.

Among the elastomeric copolymers based on ethylene and (meth)acrylic esters, those are preferred which are ethylene-ethyl acrylate-glycidyl methacrylate terpolymers, particularly terpolymers containing from 65.5 to 89.5% by moles of ethylenic units, from 10 to 24.5% by moles of units derived from ethyl

2

acrylate and from 0.5 to 10% by moles of units derived from glycidyl methacrylate.

A particularly preferred polymeric composition comprises about 70% (e.g. 68-72%) by weight of PET, the balance (about 30%) being composed of elastomer and polyethylene, the latter in quantities of from 5 to 12% by weight of the total weight of the three components.

The manufactured articles obtainable from the present polymeric blends are also within the scope of the present invention.

As will be evident from the examples which follow and from the enclosed Table and graphs, the polymeric blends of the present invention have a set of physical and mechanical properties which clearly distinguishes them from the known three-component blends (polyester, polyethylene, and elastomeric polymer) as well as from polyester-polyethylene and polyester-elastomer binary blends.

This is due to both the choice of the individual components of the polymeric blend (for example, a PET with an intrinsic viscosity of from 0.6 to 0.8 dl/g, a polyethylene with an MFI of from 10 to 30 g/10' and an elastomer based on ethylene with the above-mentioned composition) and the relative quantities of the three polymeric components, which have to be kept within the limits previously indicated.

The mixing of the components of the polymeric blend can be carried out by means of any of the known methods.

The preferred method for the formation of polymeric blends is by extrusion in the molten state and in a single phase of all the components of the blend.

Using the procedure described above, polymeric materials may be obtained which show a significant increase in their impact strength,as compared to corresponding binary blends.

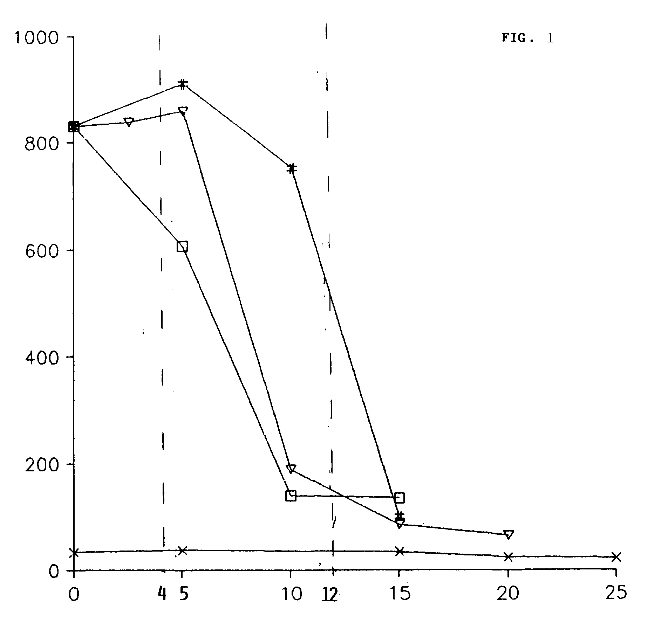

This proves that there is a synergistic effect which affords better characteristics of the composition than those expected from a simple average distribution of properties (see Figure 1).

In fact, on analysing table 1 which shows the technological details of the blends obtained according to the examples below, it can be seen that the ternary blends (PET + elastomer + HDPE) obtained, with the quantities of the individual components within the indicated limits and with the characteristics of the individual components specified above (HDPE with MFI of 25; PET with intrinsic viscosity of 0.74 dl/g etc.) (see tests No.14 and 15), have IZOD values which are much higher than those of the binary blends PET-rubber (tests No. 2 and 3).

Equally surprising results are shown in table 2 which indicates the yield stress and breaking stress values together with the deformation at break values.

The following examples are to provide a further illustration of the present invention but do not limit it in any way. Unless indicated otherwise, the percentages given refer to the weight.

All the preparations described in the examples were carried out with a co-rotating twin-screw extruder (Berstoff), equipped with a gravimetric measuring and liquid feeding system, designed in such a way as to have two feeding zones for solids (one main zone and another one situated approximately halfway down the machine) and a screw profile suitable for the thorough mixing of the components.

The following thermal profile was used in all tests:

| ZONE No. | 1 | 2 | 3 | 4 | 5 | 6 | 7 | HEAD |
|---|---|---|---|---|---|---|---|---|
| T(°C) | 30 | 260 | 265 | 270 | 270 | 275 | 280 | 285 |

The tests described below were carried out by using a screw speed of 2000 rpm for the systems containing HDPE and of 300 rpm for those with only rubber. The higher speed used in the systems containing HDPE causes a slight decrease in the IZOD value (approx. 10 units). The opposite effect is observed in the materials containing only rubber.

EXAMPLE 1 (comparative)

The following materials were fed into an extruder having the characteristics described above: in the first feeding zone, 45% by weight of the total feed of a mixture of PET (I.V. = 0.74 dl/g) with additives (talc 0.3% and ANOX® 20 0.2%, by weight with respect to the PET); 15% by weight of the total feed of a rubber having the following monomeric molar composition: ethylene 83%, ethyl acrylate 14%, glycidyl methacrylate 3% (Tg = -40°C ; $\eta$ = 600 Pa.s, $\gamma$ = 100 sec$^{-1}$, and T = 270°C) with the addition, by previous mixing, of 0.3% by weight, calculated on the rubber, of dimethyl stearylamine.

The remaining 40% (by weight of the total) of PET (with the above additives) were fed into the second feeding zone. Total capacity: 10 kg/h, number of revs: 300 rpm, melting point: 301°C, head pressure: 15-17 bar.

Details concerning the mechanical properties of the material obtained are shown in Tables 1 and 2.

EXAMPLES 2 - 4 (comparative)

Using the same procedure as and conditions similar to those described in example 1, different samples were prepared by changing the relative amounts fed:

| EXAMPLE No. | FEED 1 | | FEED 2 |
|---|---|---|---|
| | PET % | RUBBER % | PET % |
| 2 | 40 | 20 | 40 |
| 3 | 35 | 25 | 40 |
| 4 | 30 | 30 | 40 |

Details concerning the mechanical properties of the materials obtained are shown in Tables 1 and 2.

EXAMPLES 5 - 8 (comparative)

Using the same procedure as and conditions similar to those described in example 1 and using PET with the additives described above, the following tests were carried out:

| EXAMPLE No. | FEED 1 | | FEED 2 |
|---|---|---|---|
| | PET % | HDPE % | PET % |
| 5 | 55 | 5 | 40 |
| 6 | 45 | 15 | 40 |
| 7 | 40 | 20 | 40 |
| 8 | 35 | 25 | 40 |

All the above tests were carried out with a flow rate of 10-12 kg/h and a screw speed of 200 rpm.
Details concerning the mechanical properties of the materials obtained are shown in Table 1.

EXAMPLES 9 - 16

Using the same procedure as and conditions similar to those described in example 1 and using PET with the additives described above, the following tests were carried out:

| EXAMPLE No. | FEED 1 | | FEED 2 | | |
|---|---|---|---|---|---|
| | PET % | RUBBER % | HDPE MFI | % | PET % |
| 9 | 32.5 | 27.5 | 4 | 2.5 | 37.5 |
| 10 | 35 | 25 | 4 | 5 | 35 |
| 11 | 40 | 20 | 4 | 10 | 30 |
| 12 | 45 | 15 | 4 | 15 | 25 |
| 13 | 50 | 10 | 4 | 20 | 20 |
| 14 | 35 | 25 | 25 | 5 | 35 |
| 15 | 40 | 20 | 25 | 10 | 30 |
| 16 | 45 | 15 | 25 | 15 | 25 |

Details concerning the mechanical properties of the materials obtained are shown in Tables 1 and 2.

All the tests were carried out with a flow rate of 10-12 kg/h and a screw speed of 200 rpm.

All the characteristics of the mixtures described in examples 1 to 16 were used for the graphs of Figure 1.

Figure 1 shows the dependence of the IZOD shock resistance values measured in J/m (ordinate) on the compositions used in examples 1 to 16 and summarized in Table 1, namely:

the IZOD shock resistance value (ordinate) as a function of the percentage of rubber (abscissa) in a binary mixture PET-rubber (symbol □);

the shock resistance value as a function of the percentage of polyethylene having a MFI of 4 g/10' in a binary mixture PET-PE (symbol x);

the shock resistance value as a function of the quantity of polyethylene having a MFI of 4 g/10' in a ternary mixture PET-rubber-PE where the sum (rubber + PE) is kept constant and is equal to 30% by weight of the total weight of the composition (symbol ∇);

the shock resistance value as a function of the percentage of polyethylene having an MFI of 25 g/10' in a ternary mixture PET-rubber-PE where the sum (rubber + PE) is kept constant and is equal to 30% by weight of the total weight of the polymeric composition (symbols #).

Figure 1 reflects the excellent results obtained in the case of the ternary mixture PET-rubber-PE containing from 4 to 12% of PE.

TABLE 1

| EXAMPLE No. | PET % | HDPE MFI | HDPE % | RUBBER % | IZOD J/m | FLEXURAL MODULUS MPa |
|---|---|---|---|---|---|---|
| 1 (comp.) | 85 | – | – | 15 | 135 | 2213 |
| 2 (comp.) | 80 | – | – | 20 | 139 | 1947 |
| 3 (comp.) | 75 | – | – | 25 | 606 | 1675 |
| 4 (comp.) | 70 | – | – | 30 | 830 | 1501 |
| 5 (comp.) | 95 | 4 | 5 | – | 37 | 3005 |
| 6 (comp.) | 85 | 4 | 15 | – | 34 | 2922 |
| 7 (comp.) | 80 | 4 | 20 | – | 24 | 2812 |
| 8 (comp.) | 75 | 4 | 25 | – | 22 | 3009 |
| 9 | 70 | 4 | 2.5 | 27.5 | 837 | 1665 |
| 10 | 70 | 4 | 5 | 25 | 858 | 1610 |
| 11 | 70 | 4 | 10 | 20 | 189 | 1725 |
| 12 | 70 | 4 | 15 | 15 | 85 | 1762 |
| 13 | 70 | 4 | 20 | 10 | 65 | 2005 |
| 14 | 70 | 25 | 5 | 25 | 910 | 1671 |
| 15 | 70 | 25 | 10 | 20 | 750 | 1705 |
| 16 | 70 | 25 | 15 | 15 | 100 | 1739 |
| PET (comp.) | 100 | – | – | – | 33 | 3009 |

Note: Flexion according to ASTM D790

Shock IZOD according to ASTM D 256

TABLE 2

| (tensile tests ASTM D 638) | | | |
|---|---|---|---|
| EXAMPLE No. | Yield Stress (MPa) | Breaking Stress (MPa) | Deformation at break (%) |
| 1 (comp.) | 48 | 37 | 16 |
| 2 (comp.) | 39 | 37 | 19 |
| 3 (comp.) | 36 | 32 | 43 |
| 4 x) (comp.) | 31 | 25 | 62 |
| 9 | 33 | 20 | 63 |
| 10 | 32 | 25 | 53 |
| 11 | 32 | 20 | 24 |
| 12 | 32 | 29 | 11 |
| 13 | 39 | 38 | 5 |
| 14 * | 33 | 31 | 14 |
| 15 ** | 36 | 34 | 11 |

x) = PET (70%) + rubber (30%)

\* = PET (70%) + rubber (25%) + HDPE (5%)

\*\* = PET (70%) + rubber (20%) + HDPE (10%)

## Claims

1. Polymeric compositions, comprising:
   (a) 65 to 73% by weight of at least one aromatic polyester preferably having an intrinsic viscosity of from 0.6 to 0.8 dl/g (measured at 25°C in chlorophenol);
   (b) 5 to 12% by weight of at least one high density polyethylene (HDPE) preferably having a Melt Flow Index (MFI) of from 10 to 30 g/10 min when measured at 190°C with a load of 2.16 kg/cm$^2$;
   (c) 15 to 25% by weight of at least one elastomeric ethylene-(meth)acrylic ester copolymer; and
   (d) 0.05 to 1% by weight of a catalyst for the opening of an epoxide ring;
   the above percentages being based on the total amount of polymeric components present.

2. Compositions according to claim 1, additionally containing one or more additives selected from mineral fillers, fibrous reinforcing materials, nucleants, stabilizers and flame-retardants.

3. Compositions according to any one of claims 1 and 2, wherein the polyester comprises polyethylene terephthalate (PET).

4. Compositions according to any one of claims 1 to 3, wherein the polyester comprises polybutylene terephthalate (PBT).

5. Compositions according to any one of claims 1 to 4, wherein the polyester comprises the product of the poly-condensation of terephthalic acid and a mixture of ethylene glycol and butylene glycol.

6. Compositions according to any one of claims 1 to 5, wherein the elastomeric copolymer (c) comprises an ethylene-ethyl acrylate-glycidyl methacrylate terpolymer.

7. Compositions according to claim 6, wherein said terpolymer contains from 65.5 to 89.5% by moles of units derived from ethylene, from 10 to 24.5% by moles of units derived from ethyl acrylate and from 0.5 to 10% by moles of units derived from glycidyl methacrylate.

8. Compositions according to any one of claims 1 to 7, comprising about 70% by weight of PET and from 5 to 12% by weight of HDPE, the balance to 100% of the total quantity of polymers being preferably composed of the terpolymer defined in claim 7.

9. Use of the compositions according to any one of claims 1 to 8 for the production of high impact strength materials.

EP 0 481 471 B1

**10.** Manufactured articles, obtainable from the compositions according to any one of claims 1 to 8.


**Patentansprüche**

**1.** Polymerzusammensetzungen, umfassend:
(a) 65 bis 73 Gew.-% wenigstens eines aromatischen Polyesters, vorzugsweise mit einer inneren Viskosität von 0,6 bis 0,8 dl/g (gemessen bei 25 °C in Chlorphenol);
(b) 5 bis 12 Gew.-% wenigstens eines Polyethylens hoher Dichte (HDPE), vorzugsweise mit einen Schmelzindex (MFI) von 10 bis 30g/10min gemessen bei 190 °C mit einer Last von 2,16 kg/cm$^2$;
(c) 15 bis 25 Gew.-% wenigstens eines elastomeren Ethylen(Meth)acrylester-Coplymers; und
(d) 0,05 bis 1 Gew.-% eines Katalysators für die Öffnung eines Epoxidrings;
wobei die obigen Prozentangaben auf die Gesamtmenge der anwesenden Polymerbestandteile bezogen sind.

**2.** Zusammensetzungen nach Anspruch 1, die zusätzlich ein oder mehrere Additive enthalten, die ausgewählt sind aus mineralischen Füllstoffen, fasrigen Verstärkungsmaterialien, Nukleierungsmitteln, Stabilisatoren und Flammschutzmitteln.

**3.** Zusammensetzungen nach irgendeinem der Ansprüche 1 und 2, worin der Polyester Polyethylenterephthalat (PET) umfaßt.

**4.** Zusammensetzungen nach irgendeinem der Ansprüche 1 bis 3, worin der Polyester Polybutylenterephthalat (PBT) umfaßt.

**5.** Zusammensetzungen nach irgendeinem der Ansprüche 1 bis 4, worin der Polyester das Polykondensationsprodukt aus Terephthalsäure und einer Mischung aus Ethylenglycol und Butylenglycol umfaßt.

**6.** Zusammensetzungen nach irgendeinem der Ansprüche 1 bis 5, worin das elastomere Copolymer (c) ein Ethylen-Ethylacrylat-Glycidylmethacrylat-Terpolymer umfaßt.

**7.** Zusammensetzungen nach Anspruch 6, worin das Terpolymer 65,5 bis 89,5 Mol-% von Ethylen abgeleitete Einheiten, 10 bis 24,5 Mol-% von Ethylacrylat abgeleitete Einheiten und 0,5 bis 10 Mol-% von Glycidylmethacrylat abgeleitete Einheiten umfaßt.

**8.** Zusammensetzungen nach irgendeinem der Ansprüche 1 bis 7, umfassend ungefähr 70 Gew.-% PET und 5 bis 12 Gew.-% HDPE, wobei der Rest bis 100% Gesamtmenge an Polymeren bevorzugt aus dem in Anspruch 7 definierten Terpolymer zusammengesetzt ist.

**9.** Verwendung der Zusammensetzungen nach irgendeinem der Ansprüche 1 bis 8 zur Herstellung hochschlagfester Materialien.

**10.** Künstlich hergestellte Artikel, erhältlich aus den Zusammensetzungen nach irgendeinem der Ansprüche 1 bis 8.


**Revendications**

**1.** Compositions polymères comprenant :
(a) 65 à 73%, en poids d'au moins un polyester aromatique, ayant de préférence une viscosité intrinsèque de 0,6 à 0,8 dl/g (viscosité mesurée à 25 °C dans le chlorophénol);
(b) 5 à 12% en poids d'au moins un polyéthylène haute densité (HDPE), ayant de préférence un indice de fluidité à l'état fondu (MFI) de 10 à 30 g/10 min, cet indice étant mesuré à 190 °C avec une charge de 2,16 kg/cm$^2$;
(c) 15 à 25% en poids d'au moins un copolymère élastomère éthylène-ester (meth)acrylique; et
(d) 0,05 à 1 % en poids d'un catalyseur pour l'ouverture d'un cycle époxyde;
les pourcentages précédents étant basés sur la quantité totale de constituants polymères présents.

**2.** Compositions selon la revendication 1, contenant en plus un ou plusieurs additifs, choisis parmi les charges minérales, les matériaux de renforcement fibreux, les agents de nucléation, les stabilisants et

8

les agents retardant l'inflammation.

3. Compositions selon la revendication 1 ou 2, dans lesquelles le polyester comprend du poly(téréphtalate d'éthylène) (PET).

4. Compositions selon l'une quelconque des revendications 1 à 3, dans lesquelles le polyester comprend du poly(téréphtalate de butylène) (PBT).

5. Compositions selon l'une quelconque des revendications 1 à 4, dans lesquelles le polyester comprend le produit de polycondensation de l'acide téréphtalique et d'un mélange d'éthylèneglycol et de butylèneglycol.

6. Compositions selon l'une quelconque des revendications 1 à 5, dans lesquelles le copolymère élastomère (c) comprend un terpolymère d'éthylène, d'acrylate d'éthyle et de méthacrylate de glycidyle.

7. Compositions selon la revendication 6, dans lesquelles ledit terpolymère contient 65,5 à 89,5% en moles de motifs provenant de l'éthylène, 10 à 24,5% en moles de motifs provenant de l'acrylate d'éthyle et 0,5 à 10% en moles de motifs provenant ou méthacrylate de glycidyle.

8. Compositions selon l'une quelconque des revendications 1 à 7, comprenant environ 70% en poids de PET et 5 à 12% en poids de HDPE, le complément à 100% de la quantité totale de polymères étant constitué de préférence du terpolymère défini à la revendication 7.

9. Utilisation des compositions selon l'une quelconque des revendications 1 à 8, pour la production de matériaux présentant une résistance élevée aux chocs.

10. Articles manufacturés, que l'on peut obtenir à partir des compositions selon l'une quelconque des revendications 1 à 8.

FIG. 1